# EUROPÄISCHE PATENTSCHRIFT

(11) **EP 2 716 393 B1**
(45) Veröffentlichungstag und Bekanntmachung des Hinweises auf die Patenterteilung: **25.02.2015**
(21) Anmeldenummer: 12006900.0
(22) Anmeldetag: 04.10.2012
(51) Int. Cl.: B23D 47/02, B27B 5/06, B27B 31/00

(54) **Werkstückbearbeitungsvorrichtung**
Workpiece processing device
Dispositif de traitement de pièce usinée

(43) Veröffentlichungstag der Anmeldung: 09.04.2014
(73) Patentinhaber: Schelling Anlagenbau GmbH, 6858 Schwarzach (AT)
(72) Erfinder: Pöschl, Wolfgang, 6844 Altach (AT)
(74) Vertreter: Fechner, Thomas

(56) Entgegenhaltungen:
- EP-A1- 0 804 988
- EP-A1- 1 362 657
- EP-A1- 1 990 118
- DE-U1-202006 019 323
- US-A- 5 076 108

## Beschreibung

Die vorliegende Erfindung betrifft eine Werkstückbearbeitungsvorrichtung, insbesondere Plattenaufteilanlage zum Zersägen von Platten oder Plattenstapeln, mit zumindest einem verfahrbar gelagerten Werkstückauflagetisch, wobei zumindest eine Werkstückauflagefläche des Werkstückauflagetisches eine Vielzahl von Luftaustrittsöffnungen zur Ausbildung eines Luftkissens zwischen der Werkstückauflagefläche und einem darauf aufliegenden Werkstück aufweist und die Werkstückbearbeitungsvorrichtung zumindest eine Druckluftquelle zur Bereitstellung der für das Luftkissen benötigten Druckluft aufweist, gemäß dem Oberbegriff des Anspruchs 1, eine solche Vorrichtung ist in EP 1990118 offenbart.

Bei gattungsgemäßen Werkstückbearbeitungsvorrichtungen, insbesondere in Form von Plattenaufteilanlagen, werden Luftkissen eingesetzt, um einen oberflächenschonenden Werkstücktransport zu ermöglichen und um schwere Werkstücke mit geringem Kraftaufwand verschieben zu können. Solche Luftkissen werden an unterschiedlichsten Stellen der Werkstückbearbeitungsvorrichtung eingesetzt. Zur Erzeugung der Luftkissen sind die Werkstückauflageflächen mit einer Vielzahl von Luftaustrittsöffnungen ausgerüstet. Die zur Ausbildung des Luftkissens benötigte Druckluft wird durch eine entsprechende Luftdruckquelle wie z.B. ein Gebläse oder dergleichen bereitgestellt. Im Sinne einer universellen Einsatzmöglichkeit der Werkstückbearbeitungsvorrichtung für unterschiedliche Werkstückgrößen und Formen ist es bekannt, zumindest einen oder mehrere der Werkstückauflagetische der Werkstückbearbeitungsvorrichtung verfahrbar auszugestalten. Ein gattungsgemäßes Beispiel ist in der EP 2 251 127 A1 gezeigt. Die dort offenbarte Werkstückbearbeitungsvorrichtung sieht für jeden Werkstückauflagetisch eine eigene Luftdruckquelle vor, welche direkt unter dem Werkstückauflagetisch angeordnet und an diesem befestigt ist und die Luftaustrittsöffnungen in der Werkstückauflagefläche des Werkstückauflagetisches zur Ausbildung des gewünschten Luftkissens mit Druckluft versorgt. Es ist somit bei diesem Stand der Technik jeder verfahrbare Werkstückauflagetisch mit einer eigenen Druckluftquelle in Form eines Gebläses ausgerüstet. Dies hat zum einen den Nachteil, dass meist relativ viele Druckluftquellen benötigt werden, was zu hohen Kosten bei der Herstellung der Werkstückbearbeitungsvorrichtung führt. Zum anderen befindet sich das an den Werkstückauflagetischen arbeitende Bedienpersonal aber auch in unmittelbarer Nähe der Gebläse bzw. Druckluftquellen, was zu einer erheblichen Lärmbelästigung beim Bedienpersonal führt. Darüber hinaus ist auch zu bedenken, dass für die meisten Druckluftquellen insbesondere elektrische Versorgungskabel benötigt werden, die je nach Länge des Verfahrweges entsprechend geführt sein müssen.

Aufgabe der Erfindung ist es, eine Werkstückbearbeitungsvorrichtung der oben genannten Art dahingehend zu verbessern, dass diese Nachteile vermieden sind.

Hierzu schlägt die Erfindung vor, dass die Werkstückbearbeitungsvorrichtung zumindest einen, von der Druckluftquelle mit Druckluft gespeisten oder speisbaren Druckluftkanal aufweist und der Werkstückauflagetisch zur Speisung der Luftaustrittsöffnungen mit Druckluft zumindest einen Druckluftentnahmestutzen zur Entnahme von Druckluft aus dem Druckluftkanal aufweist, wobei der Druckluftentnahmestutzen verfahrbar in den Druckluftkanal eingreift.

Durch den von der Druckluftquelle gespeisten Druckluftkanal ist ein Verteilersystem bereitgestellt, mit dem die für die Ausbildung der Luftkissen benötigte Druckluft auch bei verfahrbaren Werkstückauflagetischen ohne die Notwendigkeit von Einzelgebläsen zu den entsprechenden Werkstückauflageflächen geführt werden kann. Hierdurch kann die Zahl der benötigten Druckluftquellen deutlich reduziert werden. Besonders bevorzugte Ausgestaltungsformen sehen in diesem Zusammenhang vor, dass die Werkstückbearbeitungsvorrichtung zur Speisung des Druckluftkanals oder der Druckluftkanäle mit Druckluft nur genau eine Druckluftquelle aufweist. Außerdem ist es möglich, die Druckluftquelle von dem Werkstückauflagetisch oder den Werkstückauflagetischen distanziert anzuordnen, was besonders günstig im Sinne der gewünschten Reduzierung der Lärmbelästigung des Bedienpersonals ist. Außerdem erlaubt es die Erfindung, auf aufwendige Führungen von elektrischen Versorgungskabeln zu jedem Werkstückauflagetisch zu verzichten. Ein weiterer Vorteil der Erfindung besteht darin, dass lange Verfahrwege sich durch den Druckluftkanal problemlos realisieren lassen. Außerdem ermöglicht es die Erfindung, dass die Anzahl der Werkstückauflagetische geändert werden kann, ohne dass hierdurch zusätzlicher Aufwand für die Druckluftanschlüsse anfällt. So können zusätzliche Werkstückauflagetische ohne weiteres mit Ihren Druckluftentnahmestutzen in den bereits bestehenden Druckluftkanal eingreifen. Es kann im Zuge der Erfindung also durchaus vorgesehen sein, dass die Werkstückbearbeitungsvorrichtung zwei oder mehr Werkstückauflagetische aufweist, welche jeweils mit ihren Druckluftentnahmestutzen zur Entnahme von Druckluft aus dem Druckluftkanal verfahrbar in dem Druckluftkanal gelagert sind.

Wenn hier von Druckluft die Rede ist, so kann dies jede beliebige unter entsprechenden Druck setzbare Gaszusammensetzung sein, mit welcher entsprechende Gaskissen ausgebildet werden können. Üblicherweise verwendet man hierzu die normale, überall zur Verfügung stehende Umgebungsluft, um mit einer entsprechenden Druckluftquelle die benötigte Druckluft zur Verfügung zu stellen. Es kann sich in diesem Sinne bei den Druckluftquellen um an sich bekannte Gebläse, Luftpumpen oder dergleichen handeln. Grundsätzlich ist es aber auch denkbar, falls dies aus anderen Gründen für vorteilhaft angesehen wird, andere Gase oder Gasgemische zu verwenden. Auch dies ist in diesem Sinne hier von dem Begriff der Druckluft mit umfasst. Solche speziellen anderen Gase könnten dann z.B. aus Druckflaschen als Druckluftquelle zur Verfügung gestellt werden. In diesem Zusammenhang ist auch darauf hinzuweisen, dass die Druckluftquelle nicht permanent sondern nur während des Betriebes der Werkstückbearbeitungsvorrichtung an diese angeschlossen bzw. ein Teil davon sein muss.

Bei erfindungsgemäßen Werkstückbearbeitungsvorrichtungen handelt es sich günstigerweise um Sägeanlagen, wie z.B. Plattenaufteilanlagen zum Zersägen von Platten oder Plattenstapeln. Die zu zersägenden Werkstücke sind in diesem Fall also die genannten Platten bzw. Plattenstapel. Die Erfindung zur Versorgung der Werkstückauflagetische mit der für das auszubildende Luftkissen benötigten Druckluft kann aber auch bei anderen Werkstückbearbeitungsvorrichtungen, welche zum Zersägen oder anderweitigen Bearbeiten von Werkstücken vorgesehen sind, eingesetzt werden. Der Begriff des Werkstücks ist entsprechend weit zu fassen. Es kann sich jeweils um ein einzelnes Werkstück handeln. Der Begriff des Werkstücks umfasst aber auch ein mehrteilig aufgebautes Werkstück, wobei vorzugsweise alle Teile des Werkstücks gleichzeitig bearbeitet bzw. zersägt werden, wie dies z.B. bei einem Plattenstapel der Fall ist.

Der Begriff der Verfahrbarkeit bedeutet, dass das jeweils verfahrbare Teil während des Betriebs der bereits fertig montierten Werkstückbearbeitungsvorrichtung relativ zu anderen Bauteilen dieser Werkstückbearbeitungsvorrichtung bewegt werden kann.

Besonders bevorzugte Ausgestaltungsformen der Erfindung sehen vor, dass der Druckluftentnahmestutzen gemeinsam mit der Werkstückauflagefläche verfahrbar ist. Bei diesen Ausgestaltungsformen kann somit vorgesehen sein, dass der Druckluftaufnahmestutzen und die Werkstückauflagefläche in dem jeweiligen Werkstückauflagetisch in fester Relation zueinander, also starr miteinander verbunden, angeordnet sind, womit ein besonders einfacher und verschleißarmer Aufbau erreicht ist. Natürlich kann abweichend davon auch vorgesehen sein, dass der Druckluftentnahmestutzen des Werkstückauflagetisches relativ zur Werkstückauflagefläche bewegbar ist.

Besonders bevorzugte Ausgestaltungsformen der Erfindung sehen vor, dass der Druckluftkanal zumindest eine längserstreckte Entnahmeöffnung aufweist, durch die hindurch der Druckluftentnahmestutzen zur Entnahme von Druckluft in den Druckluftkanal eingreift, wobei der Druckluftentnahmestutzen entlang der Längserstreckung der Entnahmeöffnung in dieser verfahrbar ist. Generell gesprochen handelt es sich beim Druckluftkanal zunächst einmal um einen von Wänden umschlossenen Hohlraum, welcher in der Regel längserstreckt ist. Im Betrieb befindet sich im Hohlraum die Druckluft. Von dort kann sie mittels des Druckluftentnahmestutzens entnommen und der jeweiligen Werkstückauflagefläche bzw. deren Luftaustrittsöffnungen zur Verfügung gestellt werden. Die genannte Entnahmeöffnung ist dann die Öffnung, in die der oder die Druckluftentnahmestutzen eingreifen und als entsprechende Öffnung in der Wand des Druckluftkanals ausgebildet. Bei der Entnahmeöffnung kann es sich um einen Längsschlitz in der Wandung des Druckluftkanals handeln. Besonders bevorzugte Ausgestaltungsformen sehen in diesem Zusammenhang vor, dass der Druckluftentnahmestutzen in einer Richtung quer, vorzugsweise orthogonal, zur Längserstreckung der Entnahmeöffnung in den Druckluftkanal eingreift. Unter einer Querrichtung ist dabei grundsätzlich jede, von der Parallelen abweichende Richtung gemeint. Vorzugsweise handelt es sich um einen orthogonalen Winkel, in dem der Druckluftentnahmestutzen relativ zur Längserstreckung der Entnahmeöffnung in den Druckluftkanal eingreift.

Besonders bevorzugte Ausgestaltungsformen der Erfindung sehen vor, dass der Druckluftentnahmestutzen mittels zumindest einer flexiblen Dichtung gegen den Druckluftkanal abgedichtet in diesen zur Entnahme von Druckluft eingreift. Die flexible Dichtung bzw. die flexiblen Dichtungen dienen insbesondere dazu, die Entnahmeöffnung im Druckluftkanal überall dort abzudichten bzw. zu verschließen, wo sich kein Druckluftentnahmestutzen befindet. Beim Verfahren des Druckluftentnahmestutzens entlang des Druckluftkanals ist günstigerweise vorgesehen, dass der Druckluftentnahmestutzen die Dichtung in seinem Bereich entsprechend deformiert und die Dichtung ansonsten für einen möglichst vollständigen Verschluss des Druckluftkanals sorgt. Besonders günstig ist es, wenn Druckluftentnahmestutzen zur Entnahme von Druckluft aus dem Druckluftkanal zwischen zumindest zwei flexiblen Dichtungen hindurch in den Druckluftkanal eingreift. Weiters ist es günstig, wenn die Dichtung oder die Dichtungen in Richtung der Längserstreckung der Entnahmeöffnung, vorzugsweise über die gesamte Längserstreckung der Entnahmeöffnung, längserstreckt ist bzw. sind. Die Dichtung bzw. die Dichtungen können insbesondere im Bereich der die Entnahmeöffnung umgebenden Wandungen des Druckluftkanals an diesem fixiert sein. Der Druckluftentnahmestutzen ist günstigerweise relativ zu der Dichtung bzw. den Dichtungen verfahrbar. Er drückt beim Verfahren die Dichtung günstigerweise in Verfahrrichtung beiseite bzw. auseinander, während sie sich hinter dem Druckluftentnahmestutzen wieder schließt bzw. schließen. Um die von der Druckluftquelle benötigte Leistung möglichst gering zu halten, sollten Druckluftverluste außerhalb der gewünschten Luftkissen möglichst vermieden werden. In diesem Sinne ist es günstig, wenn die Dichtung oder die Dichtungen den Druckluftkanal bzw. die Entnahmeöffnung abgesehen vom Druckluftentnahmestutzen nach außen hin vollständig abdichten.

Die flexible Dichtung bzw. die flexiblen Dichtungen können grundsätzlich sehr unterschiedlich ausgestaltet sein. Es kann sich um einfache, vorzugsweise längserstreckte, Dichtlippen handeln. Besonders bevorzugte Ausgestaltungsformen der Erfindung sehen jedoch vor, dass die Dichtung oder zumindest eine der Dichtungen oder alle Dichtungen als mittels Gas und/oder Flüssigkeit aufblasbarer Schlauch ausgebildet ist bzw. sind. Mittels des Gas- bzw. Flüssigkeitsdrucks im aufblasbaren Schlauch können die Andrückkräfte der Dichtung bzw. Dichtungen an den Druckluftentnahmestutzen sehr genau entsprechend des Drucks der Druckluft im Druckluftkanal eingestellt werden. Hierdurch ist es möglich, die Andrückkräfte der Dichtung bzw. der Dichtungen an den Druckluftentnahmestutzen so einzustellen, dass der Druckluftentnahmestutzen und damit auch der Werkstückauflagetisch mit relativ geringen Kräften verfahrbar ist, wobei trotzdem für eine entsprechende Abdichtung gesorgt ist. Mit demselben Ziel kann auch vorgesehen sein, dass der Druckluftentnahmestutzen zumindest bereichsweise, vorzugsweise zumindest in dem Bereich, in dem die Dichtung oder die Dichtungen an ihm anliegen, in Richtungen seiner Verfahrbarkeit verjüngt ausgebildete Enden aufweist. Der Druckluftentnahmestutzen kann somit in dem Bereich, in dem die Dichtung bzw. die Dichtungen an ihm anliegen, in Art eines Schiffchens mit spitz bzw. verjüngt zulaufendem Heck und Bug ausgeführt sein, um die Dichtung bzw. die Dichtungen beim Verfahren mit möglichst geringem Kraftaufwand auseinanderdrücken zu können. Außerdem erlauben die verjüngt ausgebildeten Enden des Druckluftentnahmestutzens eine besonders gute Abdichtung, also ein besonders dichtes Anlegen der Dichtungen an den Druckluftentnahmestutzen.

Besonders bevorzugte Ausgestaltungsformen der Erfindung sehen vor, dass die Werkstückbearbeitungsvorrichtung zumindest eine Sägelinie aufweist, entlang der das Werkstück zersägbar ist, und der Druckluftentnahmestutzen in Richtungen parallel zur Sägelinie verfahrbar ist.

Weitere Merkmale und Einzelheiten bevorzugter Ausgestaltungsformen der vorliegenden Erfindung ergeben sich aus der nachfolgenden Figurenbeschreibung. Es zeigen:
Fig. 1 eine schematisierte Draufsicht auf ein erfindungsgemäßes Ausführungsbeispiel einer Werkstückbearbeitungsvorrichtung in Form einer Plattenaufteilanlage;
Fig. 2 den Längsschnitt entlang der Schnittlinie AA aus Fig. 1;
Fig. 3 und 4 Detailschnitte durch den Druckluftkanal vor bzw. hinter dem Druckluftentnahmestutzen und im Bereich eines Druckluftentnahmestutzens;
Fig. 5 eine perspektivische Darstellung eines Druckluftentnahmestutzens;
Fig. 6 eine Ansicht auf die Werkstückbearbeitungsvorrichtung aus Fig. 1 von der der Vorschubeinrichtung entgegengesetzten Seite.

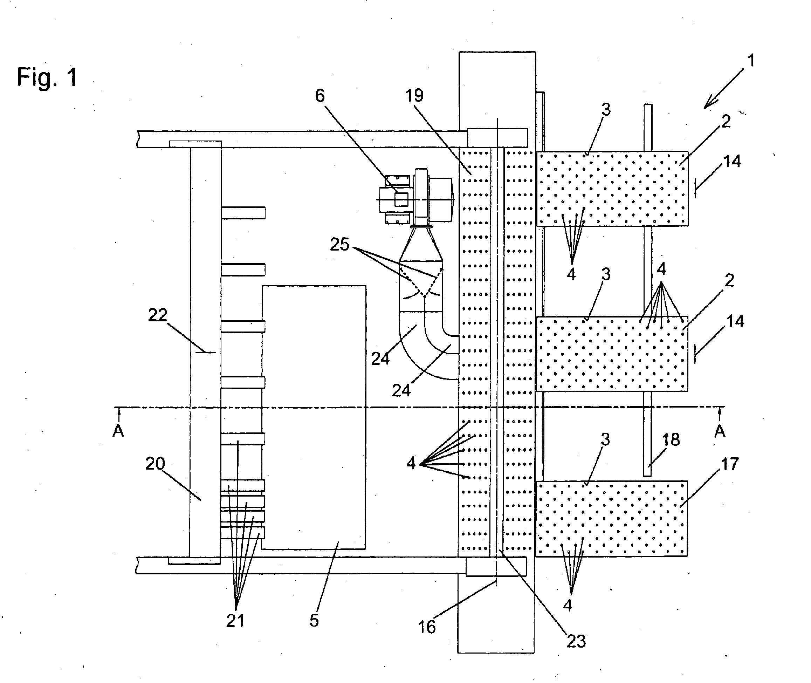

In der schematisierten Draufsicht gemäß Fig. 1 auf die erfindungsgemäße Werkstückbearbeitungsvorrichtung 1 in Form einer Plattenaufteilanlage ist der an sich bekannte Maschinentisch 19 zumindest bereichsweise durchsichtig dargestellt, um die darunter angeordnete zentrale Druckluftquelle 6 in Form eines Gebläses zeigen zu können. Auf dem durchsichtig dargestellten Bereich des Maschinentisches 19 liegt das zu zersägende Werkstück 5 auf. Das Werkstück ist zum Transport von den Greifern 21 der Vorschubeinrichtung 20 gegriffen. Die Vorschubeinrichtung 20 kann so das Werkstück 5 in beiden Vorschubrichtungen 22 zur Sägelinie 16 hin und von dieser wieder weg transportieren. Im Maschinentisch 19 können überall oder bereichsweise entsprechende Luftaustrittsöffnungen 4 vorgesehen sein, damit an den gewünschten Stellen ein Luftkissen ausgebildet werden kann, auf dem das Werkstück 5 mit relativ geringen Kräften in seine zum Zersägen entlang der Sägelinie 16 gewünschte Position gebracht werden kann. Das Zersägen entlang der Sägelinie 16 kann mit einer an sich bekannten Unterflurtischkreissäge, welche entlang der Sägelinie 16 verfahrbar ist oder mit anderen geeigneten Sägeeinrichtungen erfolgen. Um das Werkstück 5 während des Sägevorgangs auf den Maschinentisch 19 drücken zu können, ist in diesem Ausführungsbeispiel wie an sich bekannt, ein Druckbalken 23 vorgesehen, der auf das Werkstück abgesenkt wird, um dies während des Schnitt- bzw. Sägevorgangs auf den Maschinentisch 19 zu drücken. Auf der der Vorschubeinrichtung 20 gegenüber liegenden Seite der Sägelinie 16 sind die Werkstückauflagetische 2 und 17 angeordnet. Der Werkstückauflagetisch 17 ist in diesem Ausführungsbeispiel ortsfest angeordnet. Die beiden anderen Werkstückauflagetische 2 sind in diesem Ausführungsbeispiel entlang der Führungsschiene 18 und damit in den Richtungen 14 parallel zur Sägelinie 16 verfahrbar um ihre Position an die jeweils zu bearbeitenden Plattenformate optimal anpassen zu können. Sowohl der stationäre Werkstückauflagetisch 17 als auch die verfahrbar gelagerten Werkstückauflagetische 2 weisen jeweils Werkstückauflageflächen 3 mit einer Vielzahl von Luftaustrittsöffnungen 4 auf. Durch entsprechenden Austritt von Druckluft aus den Luftaustrittsöffnungen 4 wird auf den Werkstückauflageflächen 3 bei Bedarf ein Luftkissen ausgebildet, auf dem auch schwere Werkstücke einfach und ohne viel Kraftaufwand bewegt und positioniert werden kann. Zur Bereitstellung der hierfür benötigten Druckluft ist in diesem Ausführungsbeispiel eine einzige zentrale Druckluftquelle 6 in Form eines Gebläses vorgesehen. Durch einen Steuerschacht mit den Regelklappen 25 kann die Druckluft je nach Bedarf auf die Zuführkanäle 24 aufgeteilt werden. Die Druckluftquelle 6 in Form des Gebläses ist auf diese Art und Weise distanziert von den Werkstückauflagetischen 2 und 17 und damit distanziert vom Bedienpersonal angeordnet, sodass sich die Lärmbelästigung für das Bedienpersonal stark in Grenzen hält. In diesem Sinne ist es auch möglich, um die Druckluftquelle 6 herum eine Schallschutzverbauung vorzusehen, um die Lärmbelastung noch weiter zu minimieren.

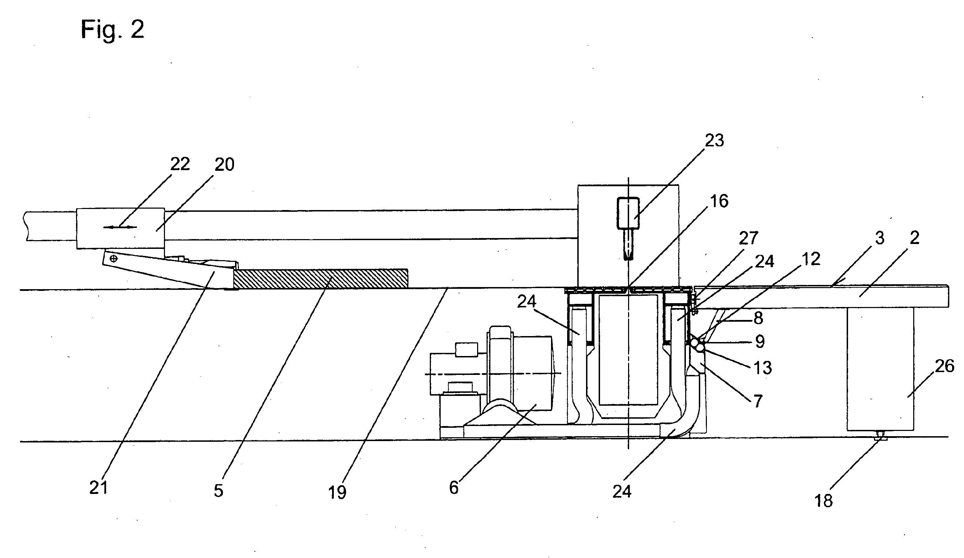

Fig. 2 zeigt nun den Schnitt entlang der Schnittlinie AA durch die in Fig. 1 dargestellte Anordnung. Zu sehen ist, wie einzelne Zuführkanäle zu entsprechenden Luftaustrittsöffnungen 4 des Maschinentischs 19 in unmittelbarer Nähe zur Sägelinie 16 führen. Ein anderer Zuführkanal 24 führt zum erfindungsgemäß vorgesehenen Druckluftkanal 7, in den die Druckluftentnahmestutzen 8 der Werkstückauflagetische 2 und 17 zur Entnahme von Druckluft eingreifen. Die aus dem Druckluftkanal 7 mittels der Druckluftentnahmestutzen 8 entnommene Druckluft dient der Ausbildung der Luftkissen über den Luftaustrittsöffnungen 4 der Werkstückauflageflächen 3 der Werkstückauflagetische 2 und 17. Wo im jeweiligen Betriebszustand ein Luftkissen ausgebildet wird, kann durch die entsprechende Einstellung der in Fig. 1 schematisiert dargestellten Regelklappen geregelt werden. Es könnte sogar jedem Druckluftentnahmestutzen 8 bzw. Werkstückauflagetisch 2 bzw. 17 jeweils eine eigene Regel- bzw. Steuerklappe 25 zum individuellen Ein- bzw. Ausschalten des Luftkissens zugeordnet sein. Durch entsprechende Ansteuerung der Druckluftquelle 6 und/oder der Regel- bzw. Steuerklappen 25 kann auch die Stärke des Luftaustritts aus den Luftaustrittsöffnungen 4 und damit die Stärke des Luftkissens geregelt werden.

In dem Schnitt gemäß Fig. 2 ist gut zu sehen, wie der verfahrbare Werkstückauflagetisch 2 mit seinem Standfuß 26 verfahrbar auf der Führungsschiene 18 geführt ist. Mittels der Führungsschiene 27 ist der Werkstückauflagetisch 2 verfahrbar am Maschinentisch 19 aufgehängt. Beim Verfahren des Werkstückauflagetisches 2 in Richtungen 14 wird der am jeweiligen Werkstückauflagetisch 2 vorgesehene Druckluftentnahmestutzen 8 entlang der Entnahmeöffnungen 9 des Druckluftkanals 7 mitgeführt. Er steht dabei in permanentem Eingriff in den Druckluftkanal 7, so dass bei entsprechender Ansteuerung der Regel- bzw. Steuerklappen 25 jederzeit das gewünschte Luftkissen auf der Werkstückauflagefläche 3 des Werkstückauflagetisches 2 ausgebildet werden kann.

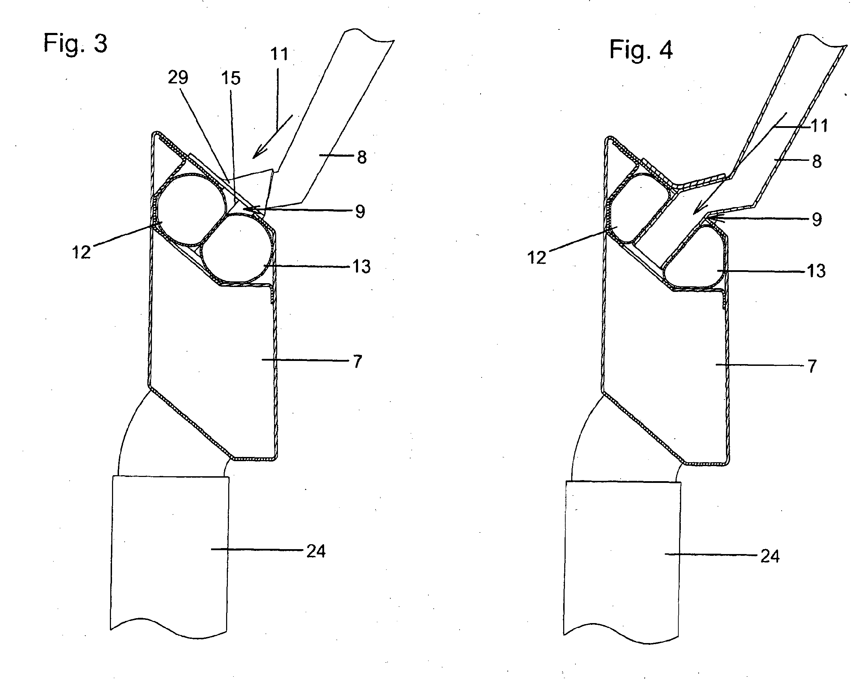

Die Art des Eingriffs und der Abdichtung des Druckluftentnahmestutzens 8 in den Druckluftkanal 7 bzw. die Entnahmeöffnung 9 ist in den Fig. 3 und 4 vergrößert dargestellt. Fig. 3 zeigt einen Schnitt parallel zur Schnittlinie AA kurz vor bzw. hinter dem Druckluftentnahmestutzen 8. Fig. 4 zeigt einen Schnitt entlang einer hierzu parallelen Schnittebene direkt durch den Druckluftentnahmestutzen 8 hindurch.

In den Fig. 3 und 4 ist gut zu sehen, dass es sich in diesem Ausführungsbeispiel bei den Dichtungen 12 und 13 um mittels Gas oder Flüssigkeit aufpumpbare bzw. unter Druck setzbare Schläuche handelt. Diese Dichtungen 12 und 13 dichten die Entnahmeöffnung 9 des Druckluftkanals 7 überall dort ab, wo im Moment kein Druckluftentnahmestutzen 8 angeordnet ist. In Fig. 3 und 4 ist auch gut zu sehen, dass die Richtung 11, in der der Druckluftentnahmestutzen 8 in den Druckluftkanal 7 eingreift, in diesem Ausführungsbeispiel orthogonal zur Längserstreckung 10 der Entnahmeöffnung 9, angeordnet ist. Die Richtung der Längserstreckung 10 steht in den Fig. 3 und 4 orthogonal bzw. normal auf der Zeichenebene. Während in dem Schnitt gemäß Fig. 3 die Dichtungen 12 und 13 so aneinander anliegen, dass in dieser Schnittebene keine Druckluft aus dem Inneren des Druckluftkanals 7 entweichen kann, drückt der Druckluftentnahmestutzen 8 im Bereich des Schnittes gemäß Fig. 4 die beiden Dichtungen 12 und 13 so weit auseinander, dass Druckluft aus dem Inneren des Druckluftkanals 7 in den Druckluftentnahmestutzen 8 eindringen kann, um letztendlich zu den Luftaustrittsöffnungen 4 in der Werkstückauflagefläche 3 des jeweiligen Werkstückauflagetisches 2 zu gelangen.

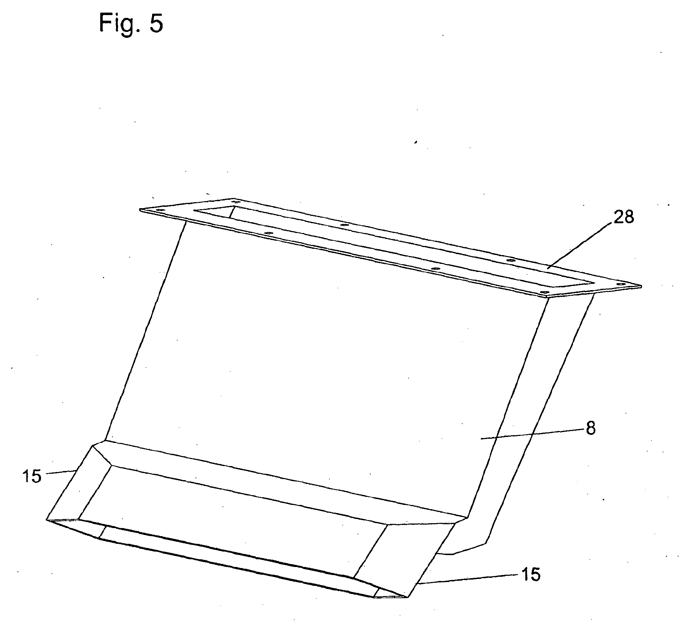

In Fig. 3 ist zumindest angedeutet, dass die Enden 15 des Druckluftentnahmestutzens 8 im Bereich zwischen den Dichtungen 12 und 13 in den Richtungen 14 seiner Verfahrbarkeit verjüngt ausgebildet sind. Hierdurch werden die Dichtungen 12 und 13 mit relativ geringem Kraftaufwand und relativ geringem Verschleiß beim Verfahren des Druckluftentnahmestutzens 9 entlang der Entnahmeöffnung 9 bzw. deren Längserstreckung 10 auseinandergedrückt. Außerdem vereinfachen die verjüngt bzw. spitz zulaufenden Enden 15 ein optimales Anliegen der Dichtungen 12 und 13 an den Endbereichen des Druckluftentnahmestutzens 8. Die verjüngt ausgebildeten Enden 15 des Druckluftentnahmestutzens 8 sind besonders gut in Fig. 5 zu sehen. Dort ist auch der Anschlussflansch 28 des Druckluftentnahmestutzens 8 gezeigt, mit dem dieser an einer entsprechenden, hier nicht im Detail dargestellten Leitung, welche zu den Luftaustrittsöffnungen 4 führt, an den restlichen Werkstückauflagetisch 2 angeschlossen wird.

Bei bevorzugten wie den hier dargestellten Ausführungsbeispielen verhindert eine, in Fig. 3 und 4 gezeigte, flexible Schutzabdeckung 29 am Druckluftentnahmestutzen 8 das Eindringen von Staub und anderweitigen Verschmutzungen in den Bereich zwischen den Dichtungen 12 und 13.

Der Vollständigkeit halber wird darauf hingewiesen, dass auch der Eingriff eines entsprechenden Druckluftentnahmestutzens 8 des ortsfesten bzw. stationären Werkstückauflagetisches 17 in den Druckluftkanal 7 in gleicher Art und Weise ausgeführt werden kann. Darüber hinaus ist es relativ einfach möglich, zusätzliche verfahrbare oder auch stationäre Werkstückauflagetische 2 bzw. 17 über ihre entsprechenden Druckluftentnahmestutzen 8 an ein und demselben Druckluftkanal 7 in entsprechender Art und Weise anzuschließen.

Der Vollständigkeit halber wird noch einmal darauf hingewiesen, dass die Ausbildung der Dichtungen 12 und 13 in Form von aufblasbaren Schläuchen zwar bevorzugt ist, aber es hierzu auch entsprechende Alternativen gibt. So können die Dichtungen 12 und 13 auch in Form von einfachen Dichtlippen ausgebildet sein.

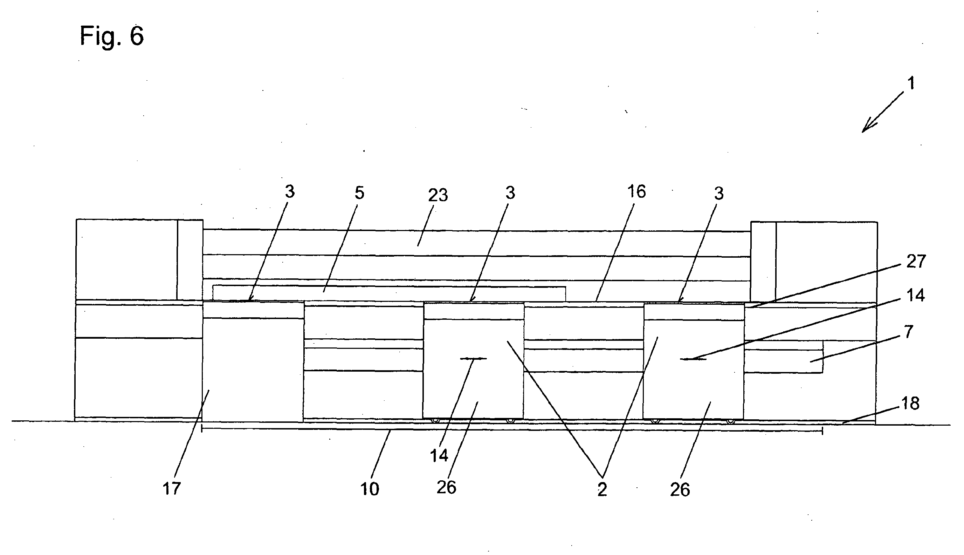

Fig. 6 zeigt in einer Ansicht auf die der Vorschubeinrichtung 20 entgegengesetzte Seite der Werkstückbearbeitungsvorrichtung 1 noch die Längserstreckung 10 des hier nur schematisiert dargestellten Druckluftkanals 7. Die Richtungen 14 der Verfahrbarkeit der Werkstückauflagetische 2 entlang des Druckluftkanals 7 verlaufen in diesem Ausführungsbeispiel sowohl parallel zur Längserstreckung 10 der Entnahmeöffnung 9 als auch parallel zur Sägelinie 16.

### Legende

### zu den Hinweisziffern:

- 1: Werkstückbearbeitungsvorrichtung
- 2: Werkstückauflagetisch
- 3: Werkstückauflagefläche
- 4: Luftaustrittsöffnung
- 5: Werkstück
- 6: Druckluftquelle
- 7: Druckluftkanal
- 8: Druckluftentnahmestutzen
- 9: Entnahmeöffnung
- 10: Längserstreckung
- 11: Richtung
- 12: Dichtung
- 13: Dichtung
- 14: Richtung
- 15: Ende
- 16: Sägelinie
- 17: Werkstückauflagetisch
- 18: Führungsschiene
- 19: Maschinentisch
- 20: Vorschubeinrichtung
- 21: Greifer
- 22: Vorschubrichtung
- 23: Druckbalken
- 24: Zufuhrkanal
- 25: Regelklappe
- 26: Standfuß
- 27: Führungsschiene
- 28: Anschlussflansch
- 29: Schutzabdeckung

## Patentansprüche

1. Werkstückbearbeitungsvorrichtung (1), insbesondere Plattenaufteilanlage zum Zersägen von Platten oder Plattenstapeln, mit zumindest einem verfahrbar gelagerten Werkstückauflagetisch (2), wobei zumindest eine Werkstückauflagefläche (3) des Werkstückauflagetisches (2) eine Vielzahl von Luftaustrittsöffnungen (4) zur Ausbildung eines Luftkissens zwischen der Werkstückauflagefläche (3) und einem darauf aufliegenden Werkstück (5) aufweist und die Werkstückbearbeitungsvorrichtung (1) zumindest eine Druckluftquelle (6) zur Bereitstellung der für das Luftkissen benötigten Druckluft aufweist, **dadurch gekennzeichnet, dass** die Werkstückbearbeitungsvorrichtung (1) zumindest einen, von der Druckluftquelle (6) mit Druckluft gespeisten oder speisbaren Druckluftkanal (7) aufweist und der Werkstückauflagetisch (2) zur Speisung der Luftaustrittsöffnungen (4) mit Druckluft zumindest einen Druckluftentnahmestutzen (8) zur Entnahme von Druckluft aus dem Druckluftkanal (7) aufweist, wobei der Druckluftentnahmestutzen (8) verfahrbar in dem Druckluftkanal (7) gelagert ist.

2. Werkstückbearbeitungsvorrichtung (1) nach Anspruch 1, **dadurch gekennzeichnet, dass** der Druckluftentnahmestutzen (8) gemeinsam mit der Werkstückauflagefläche (3) verfahrbar, vorzugsweise mit dieser starr verbunden, ist.

3. Werkstückbearbeitungsvorrichtung (1) nach Anspruch 1 oder 2, **dadurch gekennzeichnet, dass** der Druckluftkanal (7) zumindest eine längserstreckte Entnahmeöffnung (9) aufweist, durch die hindurch der Druckluftentnahmestutzen (8) zur Entnahme von Druckluft in den Druckluftkanal (7) eingreift, wobei der Druckluftentnahmestutzen (8) entlang der Längserstreckung (10) der Entnahmeöffnung (9) in dieser verfahrbar ist.

4. Werkstückbearbeitungsvorrichtung (1) nach Anspruch 3, **dadurch gekennzeichnet, dass** der Druckluftentnahmestutzen (8) in einer Richtung (11) quer, vorzugsweise orthogonal, zur Längserstreckung (10) der Entnahmeöffnung (9) in den Druckluftkanal (7) eingreift.

5. Werkstückbearbeitungsvorrichtung (1) nach einem der Ansprüche 1 bis 4, **dadurch gekennzeichnet, dass** der Druckluftentnahmestutzen (8) mittels zumindest einer flexiblen Dichtung (12, 13) gegen den Druckluftkanal (7) abgedichtet in diesen zur Entnahme von Druckluft eingreift.

6. Werkstückbearbeitungsvorrichtung (1) nach einem der Ansprüche 1 bis 5, **dadurch gekennzeichnet, dass** Druckluftentnahmestutzen (8) zur Entnahme von Druckluft aus dem Druckluftkanal (7) zwischen zumindest zwei flexiblen Dichtungen (12, 13) hindurch in den Druckluftkanal (7) eingreift.

7. Werkstückbearbeitungsvorrichtung (1) nach Anspruch 3 oder 4 und Anspruch 5 oder 6, **dadurch gekennzeichnet, dass** die Dichtung (12, 13) oder die Dichtungen (12, 13) in Richtung der Längserstreckung (10) der Entnahmeöffnung (9), vorzugsweise über die gesamte Längserstreckung (10) der Entnahmeöffnung (9), längserstreckt ist bzw. sind.

8. Werkstückbearbeitungsvorrichtung (1) nach einem der Ansprüche 5 bis 7, **dadurch gekennzeichnet, dass** die Dichtung (12, 13) oder die Dichtungen (12, 13) am Druckluftkanal (7) fixiert ist oder sind und der Druckluftentnahmestutzen (8) relativ zu der Dichtung (12, 13) oder den Dichtungen (12, 13) verfahrbar ist.

9. Werkstückbearbeitungsvorrichtung (1) nach einem der Ansprüche 5 bis 8, **dadurch gekennzeichnet, dass** die Dichtung (12, 13) oder die Dichtungen (12, 13) den Druckluftkanal (7) abgesehen vom Druckluftentnahmestutzen (8) nach außen hin vollständig abdichten.

10. Werkstückbearbeitungsvorrichtung (1) nach einem der Ansprüche 5 bis 9, **dadurch gekennzeichnet, dass** die Dichtung (12, 13) oder zumindest eine der Dichtungen (12, 13) oder alle Dichtungen (12, 13) als mittels Gas und/oder Flüssigkeit aufblasbarer Schlauch ausgebildet ist bzw. sind.

11. Werkstückbearbeitungsvorrichtung (1) nach einem der Ansprüche 1 bis 10, **dadurch gekennzeichnet, dass** der Druckluftentnahmestutzen (8) zumindest bereichsweise, vorzugsweise zumindest in dem Bereich in dem die Dichtung (12, 13) oder die Dichtungen (12, 13) an ihm anliegen, in Richtungen (14) seiner Verfahrbarkeit verjüngt ausgebildete Enden (15) aufweist.

12. Werkstückbearbeitungsvorrichtung (1) nach einem der Ansprüche 1 bis 11, **dadurch gekennzeichnet, dass** die Werkstückbearbeitungsvorrichtung (1) zwei oder mehr Werkstückauflagetische (2) aufweist, welche jeweils mit ihren Druckluftentnahmestutzen (8) zur Entnahme von Druckluft aus dem Druckluftkanal (7) verfahrbar in dem Druckluftkanal (7) gelagert sind.

13. Werkstückbearbeitungsvorrichtung (1) nach einem der Ansprüche 1 bis 12, **dadurch gekennzeichnet, dass** die Druckluftquelle (6) von dem Werkstückauflagetisch (2) oder von den Werkstückauflagetischen (2) distanziert angeordnet ist.

14. Werkstückbearbeitungsvorrichtung (1) nach einem der Ansprüche 1 bis 13, **dadurch gekennzeichnet, dass** die Werkstückbearbeitungsvorrichtung (1) zur Speisung des Druckluftkanals (7) oder der Druckluftkanäle (7) mit Druckluft genau eine Druckluftquelle (6) aufweist.

15. Werkstückbearbeitungsvorrichtung (1) nach einem der Ansprüche 1 bis 14, **dadurch gekennzeichnet, dass** die Werkstückbearbeitungsvorrichtung (1) zumindest eine Sägelinie (16) aufweist, entlang der das Werkstück (5) zersägbar ist, und der Druckluftentnahmestutzen (8) in Richtungen parallel zur Sägelinie (16) verfahrbar ist.

## Claims

1. A workpiece machining device (1), in particular a panel-sizing system for sawing panels or panel stacks, having at least one movably mounted workpiece supporting table (2), wherein at least one workpiece supporting surface (3) of the workpiece supporting table (2) has a plurality of air outlets (4) to form an air cushion between the workpiece supporting surface (3) and a workpiece (5) resting thereon and the workpiece machining device (1) has at least one compressed-air source (6) to provide the compressed air required for the air cushion, **characterized in that** the workpiece machining device (1) has at least one compressed-air channel (7) fed or feedable with compressed air by the compressed-air source (6) and, for feeding the air outlets (4) with compressed air, the workpiece supporting table (2) has at least one compressed-air withdrawal connection (8) for withdrawal of compressed air from the compressed-air channel (7), wherein the compressed-air withdrawal connection (8) is movably mounted in the compressed-air channel (7).

2. A workpiece machining device (1) according to claim 1, **characterized in that** the compressed-air withdrawal connection (8) is movable together with the workpiece supporting surface (3), is preferably rigidly connected thereto.

3. A workpiece machining device (1) according to claim 1 or 2, **characterized in that** the compressed-air channel (7) has at least one longitudinally-extended withdrawal opening (9) through which the compressed-air withdrawal connection (8) engages into the compressed-air channel (7) for withdrawal of compressed air, wherein the compressed-air withdrawal connection (8) is movable in the withdrawal opening (9), along the longitudinal extension (10) of the latter.

4. A workpiece machining device (1) according to claim 3, **characterized in that** the compressed-air withdrawal connection (8) engages into the compressed-air channel (7) in a direction (11) transverse, preferably orthogonal, to the longitudinal extension (10) of the withdrawal opening (9).

5. A workpiece machining device (1) according to any one of claims 1 to 4, **characterized in that** for the withdrawal of compressed air, the compressed-air withdrawal connection (8) engages into the compressed-air channel (7) in a manner sealed with regard to the latter by means of at least one flexible seal (12, 13).

6. A workpiece machining device (1) according to any one of claims 1 to 5, **characterized in that** for the withdrawal of compressed air from the compressed-air channel (7), compressed-air withdrawal connection (8) engages into the compressed-air channel (7) between at least two flexible seals (12, 13).

7. A workpiece machining device (1) according to claim 3 or 4 and claim 5 or 6, **characterized in that** the seal (12, 13) or the seals (12, 13) is/are longitudinally-extended in the direction of the longitudinal extension (10) of the withdrawal opening (9), preferably over the entire longitudinal extension (10) of the withdrawal opening (9).

8. A workpiece machining device (1) according to any one of claims 5 to 7, **characterized in that** the seal (12, 13) or the seals (12, 13) is or are fixed to the compressed-air channel (7) and the compressed-air withdrawal connection (8) is movable relative to the seal (12, 13) or the seals (12, 13).

9. A workpiece machining device (1) according to any one of claims 5 to 8, **characterized in that** the seal (12, 13) or the seals (12, 13) completely seal the compressed-air channel (7) to the exterior, apart from the compressed-air withdrawal connection (8).

10. A workpiece machining device (1) according to any one of claims 5 to 9, **characterized in that** the seal (12, 13) or at least one of the seals (12, 13) or all seals (12, 13) is/are in the form of a hose inflatable by means of gas and/or fluid.

11. A workpiece machining device (1) according to any one of claims 1 to 10, **characterized in that** the compressed-air withdrawal connection (8) has at least in regions, preferably at least in the region in which the seal (12, 13) or the seals (12, 13) contact therewith, ends (15) which are tapered in the directions (14) of its movability.

12. A workpiece machining device (1) according to any one of claims 1 to 11, **characterized in that** the workpiece machining device (1) has two or more workpiece supporting tables (2) each movably mounted in the compressed-air channel (7) by means of their compressed-air withdrawal connection (8) for withdrawal of compressed air from the compressed-air channel (7).

13. A workpiece machining device (1) according to any one of claims 1 to 12, **characterized in that** the compressed-air source (6) is arranged at a distance from the workpiece supporting table (2) or from the workpiece supporting tables (2).

14. A workpiece machining device (1) according to any one of claims 1 to 13, **characterized in that** the workpiece machining device (1) has exactly one compressed-air source (6) to feed the compressed-air channel (7) or the compressed-air channels (7) with compressed air.

15. A workpiece machining device (1) according to any one of claims 1 to 14, **characterized in that** the workpiece machining device (1) has at least one saw line (16) along which the workpiece (5) can be sawn, and the compressed-air withdrawal connection (8) is movable in directions parallel to the saw line (16).

## Revendications

1. Dispositif de traitement de pièces (1), en particulier installation de division de plaques pour scier des plaques ou des piles de plaques, avec au moins une table de dépôt de pièces (2) montée de façon déplaçable, dans lequel au moins une face de dépôt de pièces (3) de la table de dépôt de pièces (2) présente une multiplicité d'orifices de sortie d'air (4) pour la formation d'un coussin d'air entre la face de dépôt de pièces (3) et une pièce (5) reposant sur celle-ci et le dispositif de traitement de pièces (1) présente au moins une source d'air comprimé (6) pour la fourniture de l'air comprimé nécessaire pour le coussin d'air, **caractérisé en ce que** le dispositif de traitement de pièces (1) présente au moins un canal d'air comprimé (7) qui est ou peut être alimenté en air comprimé par la source d'air comprimé (6) et la table de dépôt de pièces (2) présente, pour l'alimentation des orifices de sortie d'air comprimé (4) avec de l'air comprimé, au moins un tuyau de prélèvement d'air comprimé (8) pour le prélèvement d'air comprimé hors du canal d'air comprimé (7), dans lequel le tuyau de prélèvement d'air comprimé (8) est monté de façon déplaçable dans le canal d'air comprimé (7).

2. Dispositif de traitement de pièces (1) selon la revendication 1, **caractérisé en ce que** le tuyau de prélèvement d'air comprimé (8) est déplaçable de concert avec la face de dépôt de pièces (3), et est de préférence fixé à celle-ci.

3. Dispositif de traitement de pièces (1) selon la revendication 1 ou 2, **caractérisé en ce que** le canal d'air comprimé (7) présente au moins une ouverture de prélèvement (9) s'étendant longitudinalement, à travers laquelle le tuyau de prélèvement d'air comprimé (8) s'engage pour le prélèvement d'air comprimé dans le canal d'air comprimé (7), dans lequel le tuyau de prélèvement d'air comprimé (8) est déplaçable dans l'ouverture de prélèvement (9) le long de l'extension longitudinale (10) de celle-ci.

4. Dispositif de traitement de pièces (1) selon la revendication 3, **caractérisé en ce que** le tuyau de prélèvement d'air comprimé (8) s'engage dans le canal d'air comprimé (7) dans une direction (11) transversale, de préférence orthogonale, à l'extension longitudinale (10) de l'ouverture de prélèvement (9).

5. Dispositif de traitement de pièces (1) selon l'une quelconque des revendications 1 à 4, **caractérisé en ce que** le tuyau de prélèvement d'air comprimé (8) s'engage dans le canal d'air comprimé (7) pour le prélèvement d'air comprimé, en étant étanche par rapport à celui-ci au moyen d'au moins un joint d'étanchéité flexible (12, 13).

6. Dispositif de traitement de pièces (1) selon l'une quelconque des revendications 1 à 5, **caractérisé en ce que** le tuyau de prélèvement d'air comprimé (8) s'engage dans le canal d'air comprimé (7) entre au moins deux joints d'étanchéité flexibles (12, 13) pour le prélèvement d'air comprimé hors du canal d'air comprimé (7).

7. Dispositif de traitement de pièces (1) selon la revendication 3 ou 4 et la revendication 5 ou 6, **caractérisé en ce que** le joint d'étanchéité (12, 13) ou les joints d'étanchéité (12, 13) s'étend/s'étendent longitudinalement dans la direction de l'extension longitudinale (10) de l'ouverture de prélèvement (9), de préférence sur toute l'extension longitudinale (10) de l'ouverture de prélèvement (9).

8. Dispositif de traitement de pièces (1) selon l'une quelconque des revendications 5 à 7, **caractérisé en ce que** le joint d'étanchéité (12, 13) ou les joints d'étanchéité (12, 13) est/sont fixé(s) au canal d'air comprimé (7) et le tuyau de prélèvement d'air comprimé (8) est déplaçable par rapport au joint d'étanchéité (12, 13) ou aux joints d'étanchéité (12, 13).

9. Dispositif de traitement de pièces (1) selon l'une quelconque des revendications 5 à 8, **caractérisé en ce que** le joint d'étanchéité (12, 13) ou les joints d'étanchéité (12, 13) assure(nt) une étanchéité totale du canal d'air comprimé (7) vers l'extérieur, abstraction faite du tuyau de prélèvement d'air (8).

10. Dispositif de traitement de pièces (1) selon l'une quelconque des revendications 5 à 9, **caractérisé en ce que** le joint d'étanchéité (12, 13) ou au moins un des joints d'étanchéité (12, 13) ou tous les joints d'étanchéité (12, 13) est/sont réalisé(s) sous la forme d'un tuyau souple gonflable avec un gaz et/ou avec un liquide.

11. Dispositif de traitement de pièces (1) selon l'une quelconque des revendications 1 à 10, **caractérisé en ce que** le tuyau de prélèvement d'air comprimé (8) présente au moins localement, de préférence au moins dans la région dans laquelle le joint d'étanchéité (12, 13) ou les joints d'étanchéité (12, 13) est/sont appliqué (s) sur lui, des extrémités (15) qui se rétrécissent dans les directions (14) de sa mobilité.

12. Dispositif de traitement de pièces (1) selon l'une quelconque des revendications 1 à 11, **caractérisé en ce que** le dispositif de traitement de pièces (1) présente deux ou plus de deux tables de dépôt de pièces (2), qui sont montées respectivement avec leurs tuyaux de prélèvement d'air comprimé (8) pour le prélèvement d'air comprimé hors du canal d'air comprimé (7) déplaçables dans le canal d'air comprimé (7).

13. Dispositif de traitement de pièces (1) selon l'une quelconque des revendications 1 à 12, **caractérisé en ce que** la source d'air comprimé (6) est disposée à distance de la table de dépôt de pièces (2) ou des tables de dépôt de pièces (2).

14. Dispositif de traitement de pièces (1) selon l'une quelconque des revendications 1 à 13, **caractérisé en ce que** le dispositif de traitement de pièces (1) présente exactement une source d'air comprimé (6) pour l'alimentation du canal d'air comprimé (7) ou des canaux d'air comprimé (7) avec de l'air comprimé.

15. Dispositif de traitement de pièces (1) selon l'une quelconque des revendications 1 à 14, **caractérisé en ce que** le dispositif de traitement de pièces (1) présente au moins une ligne de sciage (16), le long de laquelle la pièce (5) peut être sciée, et le tuyau de prélèvement d'air comprimé (8) est déplaçable dans des directions parallèles à la ligne de sciage (16).
